(19) Europäisches Patentamt
European Patent Office
Office européen des brevets

(11) **EP 2 830 192 A2**

(12) **EUROPEAN PATENT APPLICATION**

(43) Date of publication:
**28.01.2015 Bulletin 2015/05**

(51) Int Cl.:
***H02K 1/27*** *(2006.01)*

(21) Application number: **14178238.3**

(22) Date of filing: **23.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.07.2013 JP 2013154779**

(71) Applicant: **Kabushiki Kaisha Toshiba**
**Tokyo 105-8001 (JP)**

(72) Inventors:
• **Ueda, Takashi**
**Tokyo, 105-8001 (JP)**

• **Arata, Masanori**
**Tokyo, 105-8001 (JP)**
• **Hirose, Takaaki**
**Tokyo, 105-8001 (JP)**
• **Nakayama, Shinya**
**Tokyo, 105-8001 (JP)**
• **Nakamura, Hideyuki**
**Tokyo, 105-8001 (JP)**

(74) Representative: **Henkel, Breuer & Partner**
**Patentanwälte**
**Maximiliansplatz 21**
**80333 München (DE)**

(54) **Electric rotating apparatus**

(57) According to one embodiment, there is provided an electric rotating apparatus including a permanent magnet type rotor (10) in which wedge-shaped slots (15) are formed on an outer circumferential portion of a rotor core (12) along an axial direction of a rotor, and permanent magnets (13) are fitted in the wedge-shaped slots (15), thereby forming a plurality of rotor magnetic poles. Nonmagnetic regions extending in the axial direction of the rotor core (12) are formed between the plurality of rotor magnetic poles.

F I G. 1

EP 2 830 192 A2

**Description**

Embodiments described herein relate generally to an electric rotating apparatus including a permanent magnet type rotor.

A wind power generation system using natural energy such as wind power as a power source converts the natural energy into rotational energy by using a wind blade (also called a turbine blade), and extracts electric energy from a generator. A first type of the wind power generation system is a type by which the generator is driven by the rotational energy obtained by the wind blade via a speed increasing gear. A second type of the wind power generation system is a type by which the rotational energy obtained by the wind blade is directly transmitted to the generator without using any speed increasing gear in order to reduce noise or a loss produced by a speed increasing gear while the generator is rotating.

Equation (1) below establishes the relationship between a rotational speed n, the number p of magnetic poles, and a voltage frequency f of the generator. When keeping the voltage frequency f constant, the rotational speed n and the number p of magnetic poles have an inversely proportional relationship.

$$n = (120 \times f) / p \qquad \qquad ...(1)$$

When generating power by setting the voltage frequency f at a commercial frequency (50 or 60 Hz) in a wind power generation system that is not equipped with a speed-increasing gear, the number p of magnetic poles must be increased because the rotational speed of the wind blade, i.e., the generator is low. As a result, the size of the wind power generation system not equipped with a speed increasing gear becomes larger than that of a generator which rotates at a high speed by using a speed-increasing gear and has the same generation capacity.

In a large wind power generation system, a tower supports a wind blade, generator, and nacelle. Therefore, the weight and size of the generator affect the manufacturing and building costs of the nacelle and tower. To reduce the manufacturing and building costs of the nacelle and tower, it is necessary to reduce the size and weight of the generator.

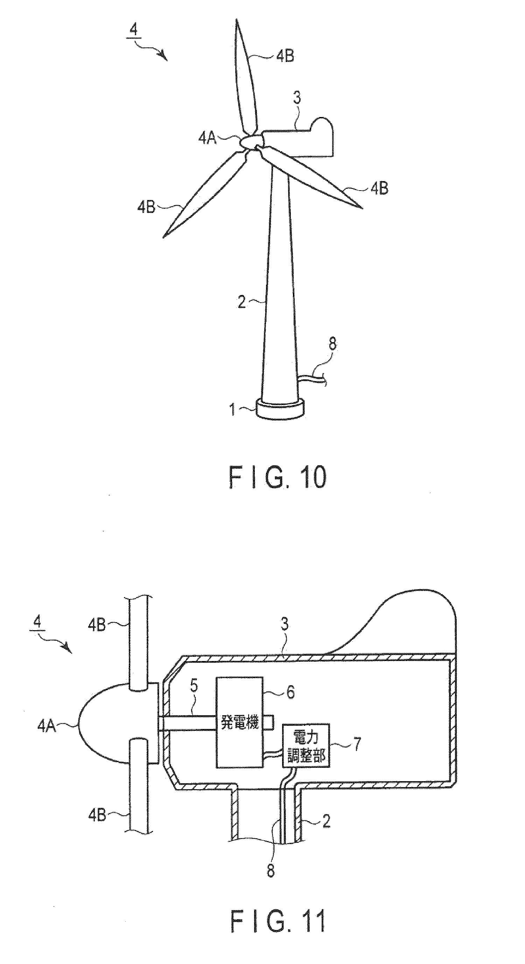

FIG. 10 is a perspective view showing an example of an outline of the configuration of a large-sized wind power generation system. This wind power generation system includes a base 1, tower 2, nacelle 3, and wind blade 4 as main constituent elements. The tower 2 is vertically installed on the base 1. The nacelle 3 is installed at the top of the tower 2. The wind blade 4 is horizontally installed with respect to the nacelle 3. The wind blade 4 includes a horizontal blade shaft 4A and a plurality of wind blade main bodies 4B. The plurality of wind blade main bodies 4B are attached at equal intervals to the outer circumferential portion of the blade shaft 4A.

FIG. 11 is a view showing an example of the internal arrangement of the nacelle 3 in the wind power generation system shown in FIG. 10. The nacelle 3 contains a generator 6, power regulator 7, and the like. The generator 6 is connected to the blade shaft 4A of the wind blade 4 via a rotating shaft 5. The power regulator 7 regulates the voltage and frequency generated by the generator 6.

When wind power rotates the wind blade 4 in the power wind generation system configured as described above, the rotating force is transmitted from the blade shaft 4A to the rotating shaft 5 installed in the nacelle 3. The generator 6 generates electric power by this transmission. After the power regulator 7 regulates the voltage and frequency of the electric power generated by the generator 6, the electric power is routed to a lower portion by a cable 8 through the inside of the tower 2, routed outside the tower 2 from the vicinity of the base 1, and connected to a power system (including a power supply and load) (not shown).

Note that the power regulator 7 is installed in the nacelle 3 in the example shown in FIG. 11. However, the power regulator 7 may also be installed on the ground due to the structure of the nacelle 3 or tower 2.

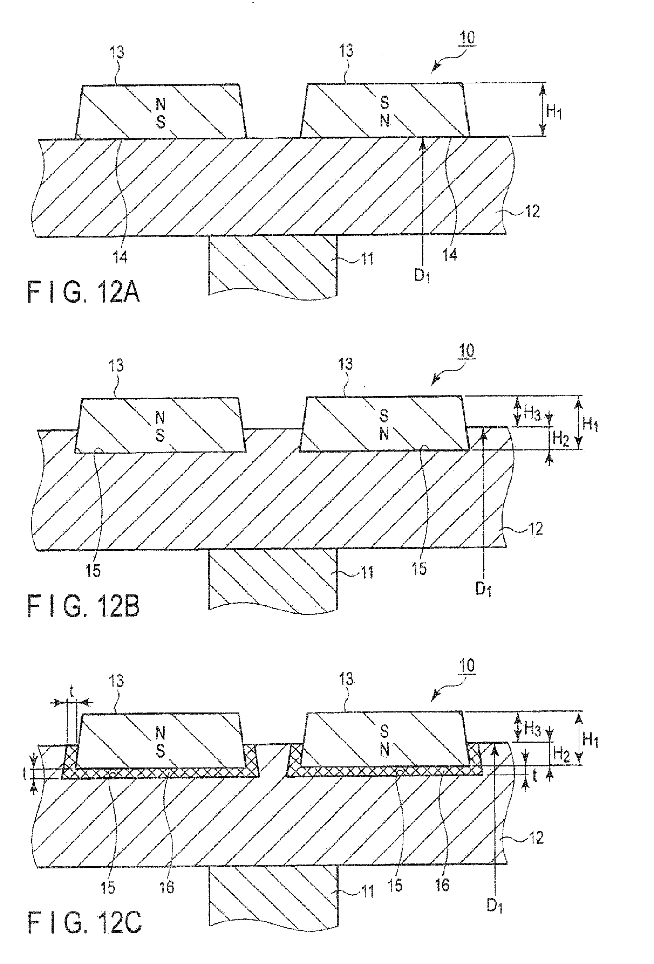

FIGS. 12A, 12B, and 12C are axial-direction sectional views showing a part of horizontally-displayed conventional permanent magnet type rotors.

A feature common to these permanent magnet type rotors shown in FIGS. 12A, 12B, and 12C is that a plurality of permanent magnets 13 are arranged in the circumferential direction on the outer circumferential portion of an circular rotor core 12. The rotor core 12 is fastened to a spoke 11. The section of the permanent magnet 13 is formed into a trapezoidal shape.

The differences between FIGS. 12A, 12B, and 12C will now be explained.

In a permanent magnet type rotor 10 shown in FIG. 12A, the permanent magnets 13 are fastened at predetermined intervals in the circumferential direction on a flat outer circumferential portion of the rotor core 12 by using an adhesive 14 such as an epoxy resin so as to be parallel to the axial direction, thereby forming rotor magnetic poles. Note that the height of the permanent magnet 13 is $(H_1)$, and the radius from the rotation center to the outer circumferential surface of the rotor core 12 is $(D_1)$.

The lifetime of a wind power generator is generally 20 to 30 years. The permanent magnet 13 is influenced by electromagnetic vibrations or electromagnetic forces in normal operation or when a shortcircuit fault occurs. Accordingly, the adhesion decreases due to the deterioration with time of the adhesive 14, so the permanent magnet 13 may become detached from the rotor core 12. This deteriorates long-term reliability.

The difference of the permanent magnet type rotor 10 shown in FIG. 12B from that shown in FIG. 12A is a method of fastening the permanent magnets 13. Specifically, instead of adhering the permanent magnets 13 to the rotor core 12 by the adhesive 14, wedge-shaped slots 15, each conforming to the shape of a lower half portion (e.g., a portion from the lower bottom portion to about half of height ($H_2$)) as a part on the bottom portion side of the permanent magnet 13, are formed in the outer circumferential portion of the rotor core 12. The wedge-shaped slot 15 is a slot which is entirely tapered such that the width of the opening is smaller than that of the bottom. Each rotor magnetic pole is formed by directly fitting the trapezoidal permanent magnet 13 in the wedge-shaped slot 15.

Note that in this case, the height ($H_2$) of the wedge-shaped slot 15 is half or less than the height ($H_1$) of the permanent magnet 13. A portion ($H_1 - H_2$) of the permanent magnet 13, which is obtained by subtracting the height ($H_2$) of the wedge-shaped slot 15 from the height ($H_1$) of the permanent magnet 13, protrudes from the outer circumferential surface of the rotor core 12. Note that the radius ($D_1$) from the rotation center to the outer circumferential surface of the rotor core 12 is the same as that shown in FIG. 12A.

The permanent magnet type rotor 10 having this arrangement has the advantage that the possibility of detachment of the permanent magnet 13 caused by the influence of electromagnetic vibrations or electromagnetic forces is lower than that of the permanent magnet type rotor 10 shown in FIG. 12A.

The permanent magnet type rotor 10 shown in FIG. 12C has an arrangement in which the lower half portion (height $H_2$ is about half of $H_1$) of the permanent magnet 13 is fitted in a magnet base 16 beforehand, instead of fastening the permanent magnet 13 by directly fitting it in the wedge-shaped slot 15 formed in the outer circumferential portion of the rotor core 12 as shown in FIG. 12B. In addition, in the permanent magnet type rotor 10, each rotor magnetic pole is formed by fitting the magnet base 16 in the wedge-shaped slot 15. Note that the magnet base 16 is formed to have a thickness (t) in the lower bottom portion and two side portions by using rolled steel such as SS400.

In this case, the wedge-shaped slot 15 is formed to be larger in the depth direction and widthwise direction by the thickness (t) of the magnet base 16, so that the height ($H_3$) of the protrusion of the permanent magnet 13 from the outer circumferential portion of the rotor core 12 becomes equal to that in the permanent magnet type rotor 10 shown in FIG. 12B.

The permanent magnet type rotor 10 using the magnet base 16 has the same advantage as that of the permanent magnet type rotor 10 shown FIG. 12B. In addition, the use of the permanent magnet type rotor 10 makes it possible to divide the rotor assembling work into the work of fitting the permanent magnet 13 in the magnet base 16, and the work of fitting the magnet base 16 in the wedge-shaped slot 15. Accordingly, the permanent magnet type rotor 10 has the advantage that the workability of the assembling work increases.

When compared to the case in which the permanent magnet 13 is adhered to the outer circumferential portion of the rotor core 12 by the adhesive 14 as shown in FIG. 12A, the permanent magnet type rotor 10 shown in FIG. 12B or 12C described above improves the effect of preventing the detachment of the permanent magnet 13. On the other hand, since the lower half portion of the permanent magnet 13 is embedded in the wedge-shaped slot 15 formed in the outer circumferential portion of the rotor core 12, part of the magnetic flux of the permanent magnet 13 experiences magnetic flux leakage. Consequently, there is a disadvantage in that a main magnetic flux interlinking to the armature coil of a stator decreases.

If the number of permanent magnets to be attached to the outer circumferential portion of the rotor core 12 is increased in order to compensate for this decrease in main magnetic flux, the size ($Di^2 \times^* L$, Di; stator core inner radius, L; stator axial length) of the generator increases. Also, the iron loss of the rotor core 12, positioned in a path in which the magnetic flux leakage flows between the permanent magnets 13, increases.

In general, according to one embodiment, there is provided an electric rotating apparatus including a permanent magnet type rotor in which wedge-shaped slots are formed on an outer circumferential portion of a rotor core along an axial direction of a rotor, and permanent magnets are fitted in the wedge-shaped slots, thereby forming a plurality of rotor magnetic poles. Nonmagnetic regions extending in the axial direction of the rotor core are formed between the plurality of rotor magnetic poles.

The invention can be more fully understood from the following detailed description when taken in conjunction with the accompanying drawings, in which:

FIG. 1 is an axial-direction sectional view showing a part of a horizontally-displayed permanent magnet type rotor of an electric rotating apparatus according to the first embodiment;

FIG. 2 is an axial-direction sectional view showing a horizontally-displayed permanent magnet type rotor of an electric rotating apparatus according to the second embodiment;

FIG. 3 is an axial-direction sectional view showing a horizontally-displayed permanent magnet type rotor of an electric rotating apparatus according to the third embodiment;

FIG. 4 is an axial-direction sectional view showing a horizontally-displayed permanent magnet type rotor of an electric rotating apparatus according to the fourth embodiment;

FIG. 5 is a view obtained by horizontally-displaying a partially enlarged view of a permanent magnet type rotor of an electric rotating apparatus according to the fifth embodiment;

FIG. 6 is a view obtained by horizontally-displaying a partially enlarged view of a permanent magnet type rotor of an electric rotating apparatus according to the sixth embodiment;

FIG. 7 is a plan view showing a part of the permanent magnet type rotor;

FIG. 8 is a view obtained by horizontally-displaying a partially enlarged view of a permanent magnet type rotor of an electric rotating apparatus according to the seventh embodiment;

FIG. 9 is a plan view showing a part of the permanent magnet type rotor;

FIG. 10 is a perspective view showing an example of an outline of the configuration of a large-sized wind power generation system;

FIG. 11 is a view showing an example of the internal arrangement of the nacelle 3 in the wind power generation system shown in FIG. 10;

FIG. 12A is axial-direction sectional views showing a part of horizontally-displayed conventional permanent magnet type rotors;

FIG. 12B is axial-direction sectional views showing a part of horizontally-displayed conventional permanent magnet type rotors; and

FIG. 12C is axial-direction sectional views showing a part of horizontally-displayed conventional permanent magnet type rotors.

Embodiments will be explained below with reference to the accompanying drawings. Note that portions common to these drawings will be denoted by the same reference numerals or the same reference numerals given suffixes, and a repetitive explanation will be omitted as needed.

(First Embodiment)

First, the first embodiment will be explained.

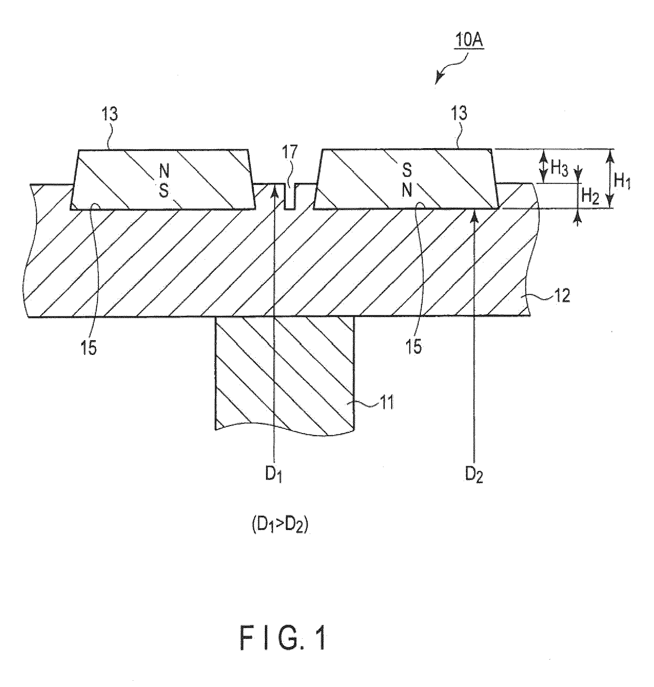

FIG. 1 is an axial-direction sectional view showing a part of a horizontally-displayed permanent magnet type rotor of an electric rotating apparatus according to the first embodiment.

A permanent magnet type rotor 10A according to this embodiment is based on the permanent magnet type rotor 10 having the structure explained in FIG. 12B, and is obtained by improving the rotor 10.

That is, some arrangements of the permanent magnet type rotor 10A of this embodiment are the same as those of the permanent magnet type rotor 10 shown in FIG. 12B. The same arrangements will be explained. First, spokes 11 are radially attached to a rotating shaft (not shown). Second, each trapezoidal permanent magnet 13 is directly fitted in a circular rotor core 12 and wedge-shaped slot 15 such that the upper bottom is positioned outside, thereby forming a rotor magnetic pole. Third, the circular rotor core 12 is fastened to the spokes 11, and formed by a magnetic material such as rolled steel. Fourth, the wedge-shaped slots 15 are formed along the axial direction of the rotor in the outer circumferential portion of the circular rotor core 12.

However, in the permanent magnet type rotor 10A of this embodiment, nonmagnetic regions are formed in parallel to the above-described wedge-shaped slots 15 between the rotor magnetic poles formed by the permanent magnets 13 on the outer circumferential portion of the rotor core 12, thereby increasing the magnetic resistance in these regions. Accordingly, the permanent magnet type rotor 10A is different both structurally and functionally from the permanent magnet type rotor 10 shown in FIG. 12B. The "nonmagnetic region" herein mentioned is a general term of a slit or space filled with air, and a region formed by a nonmagnetic material such as copper, aluminum, or stainless steel. Note that $D_1$ shown in FIG. 1 is the outer radius of the rotor core 12.

In this embodiment, each nonmagnetic region is formed by a slit 17 formed in the axial direction between the rotor magnetic poles formed by the permanent magnets 13. The magnetic permeability in the slit 17 is the same as that of air. Therefore, the magnetic permeability in the slit 17 is much lower than that of the rotor core 12. Accordingly, the magnetic resistance between the rotor magnetic poles is much higher than that of the rotor core 12. This makes it possible to reduce magnetic flux leakage between the permanent magnets 13, i.e., between the rotor magnetic poles. Consequently, it is possible to increase the amount of main magnetic flux interlinking to an armature winding arranged on the stator side (not shown). Note that the effect of reducing magnetic flux leakage increases as the depth of the slit 17 increases. However, the mechanical strength of the rotor core 12 decreases. Accordingly, the depth of the slit 17 is preferably equal to the embedding height ($H_2$) of the permanent magnet 13.

In this embodiment as described above, the nonmagnetic region is formed in a portion positioned between the rotor magnetic poles of the rotor core 12 by forming the slit 17 extending in the axial direction. Therefore, the magnetic resistance between the rotor magnetic poles can be made higher than those of conventional apparatuses.

As a result, it is possible to reduce the amount of magnetic flux leakage between the rotor magnetic poles, and increase the amount of main magnetic flux interlinking to the armature winding on the stator side. Also, the rotor magnetic poles can be reduced because the amount of main magnetic flux increases. This makes it possible to reduce the size and weight of the generator.

Furthermore, an iron loss produced between the rotor magnetic poles by the influence of a magnetic flux formed by the armature winding or the influence of the armature core structure can be reduced compared to those of conventional structures.

(Second Embodiment)

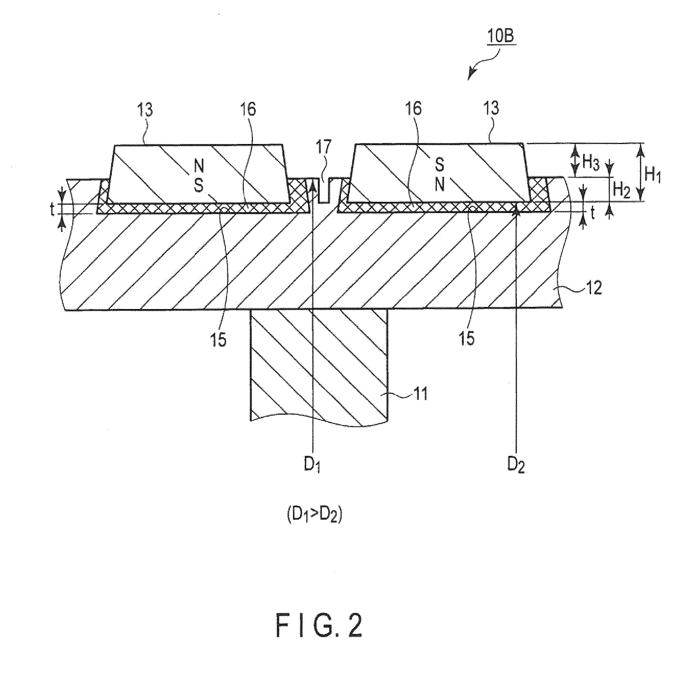

FIG. 2 is an axial-direction sectional view showing a horizontally-displayed permanent magnet type rotor of an electric rotating apparatus according to the second embodiment.

A permanent magnet type rotor 10B according to this embodiment is based on the permanent magnet type rotor 10 having the structure explained in FIG. 12C, and is obtained by improving the rotor 10.

That is, the permanent magnet type rotor 10B of this embodiment is the same as the permanent magnet type rotor 10 shown in FIG. 12C in that before a permanent magnet 13 is inserted into a rotor core 12, the lower half portion of the trapezoidal permanent magnet 13 is fitted in a magnet base 16, and the magnet base 16 is fitted in a wedge-shaped slot 15, in order to improve the workability of the rotor assembling process. Also, the dimensions ($H_1$, $H_2$, $H_3$, and $D_1$) and the like are the same as those of the first embodiment.

The permanent magnet type rotor 10B of this embodiment differs both structurally and functionally from the permanent magnet type rotor 10 shown in FIG. 12C described previously in that a slit 17 is formed in the rotor core 12 positioned between rotor magnetic poles each formed by the permanent magnet 13 and magnet base 16, thereby increasing the magnetic resistance in this portion.

In this embodiment, as in the first embodiment, magnetic flux leakage between adjacent rotor magnetic poles can be reduced by forming the slit 17 in the rotor core 12 between the magnet bases 16. It is also possible to reduce the size and weight of the generator by reducing the rotor magnetic poles. Furthermore, iron loss between the rotor magnetic poles can be reduced compared to those of the conventional apparatuses.

In addition, in this embodiment, magnet base 16 is fitted in the rotor core 12 after the permanent magnet 13 is fitted in the magnet base 16. This facilitates attaching and detaching the permanent magnet 13 compared to the first embodiment, and can improve the workability of the electric rotating apparatus assembling process.

(Third Embodiment)

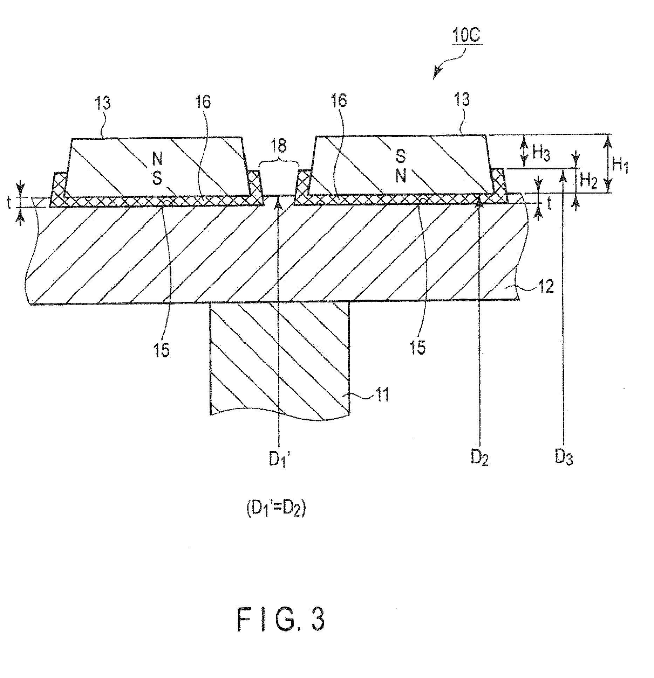

FIG. 3 is an axial-direction sectional view showing a horizontally-displayed permanent magnet type rotor of an electric rotating apparatus according to the third embodiment.

The difference of a permanent magnet type rotor 10C of this embodiment from the permanent magnet type rotor 10B of the second embodiment is that the depth of a wedge-shaped slot 15 formed in a rotor core 12 is decreased to the thickness (t) of a magnet base 16 so as to increase the height by which a rotor magnetic pole protrudes from the outer circumferential portion of the rotor core 12, thereby forming a nonmagnetic region in a space 18 surrounded by the magnet bases 16 and the outer circumferential portion of the rotor core 12, and making the magnetic resistance in this nonmagnetic region higher than those of the conventional apparatuses.

In this embodiment, the depth of the wedge-shaped slot 15 in which the rotor magnetic pole is fitted is equal to the thickness (t) of the magnet base 16. This reduces the amount of the rotor magnetic pole that is embedded in the rotor core 12. Consequently, the outer radius ($D_1$') of the rotor core 12 can be made smaller than the outer radius ($D_1$) of the second embodiment.

In the permanent magnet type rotor 10B of the second embodiment, the portion of ($H_2$ + t) of the rotor magnetic pole is embedded in the rotor core 12. On the other hand, in the permanent magnet type rotor 10C of this embodiment, only the thickness (t) of the magnet base 16 is embedded in the rotor core 12. That is, the outer radius ($D_1$') between the rotor magnetic poles in this embodiment is smaller than the outer radius ($D_1$) of the second embodiment by the height ($H_2$) by which a permanent magnet 13 is covered with the magnet base 16. Also, the space 18 is formed as a nonmagnetic region surrounded by adjacent magnet bases 16 and the outer circumferential portion of the rotor core 12.

Note that the outer radius ($D_1$') of the rotor core 12 and the radius ($D_2$) from the rotation center to the lower bottom portion of the permanent magnet 13 are the same ($D_1$' = $D_2$). Note also that the outermost radius ($D_3$) of the magnet base 16 is larger than the position ($D_2$) of the lower bottom portion of the permanent magnet 13 ($D_2$ < $D_3$).

In this embodiment as described above, the space 18 is formed on the outer-radial portion of the rotor core 12 and between adjacent magnet bases 16. Therefore, the magnetic resistance between the rotor magnetic poles can be increased. Consequently, the same effects as those of the first and second embodiments can be achieved, and, in addition, the outer radius ($D_1$') between the rotor magnetic poles can be made smaller than the outer radius ($D_1$) between

the rotor magnetic poles of the first and second embodiments. Accordingly, the size and weight of the generator can further be reduced.

Furthermore, in this embodiment, the space 18 is formed in the portion surrounded by the magnet bases 16 and the outer circumferential portion of the rotor core 12. This can make the ventilation area larger than those of the first and second embodiments, and improve the cooling performance accordingly. This makes it possible to suppress temperature rises of the permanent magnet type rotor and armature, and reduce ventilation loss.

(Fourth Embodiment)

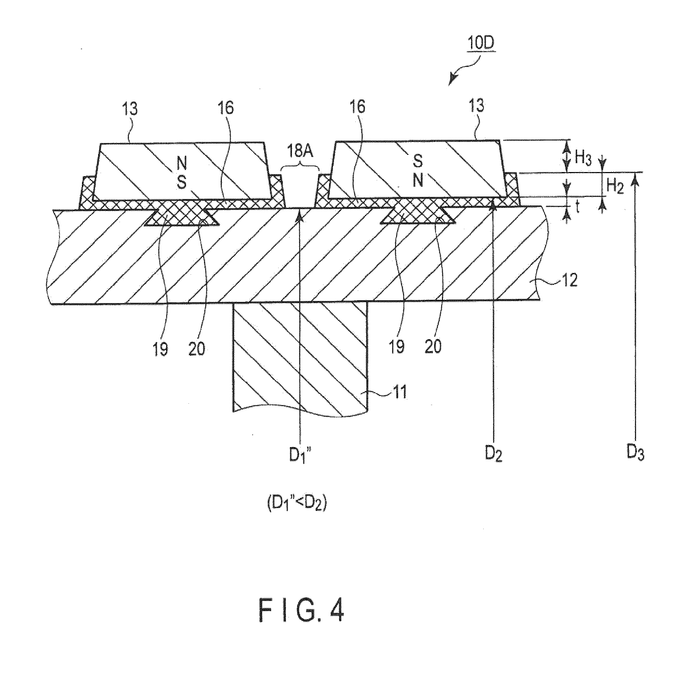

FIG. 4 is an axial-direction sectional view showing a horizontally-displayed permanent magnet type rotor of an electric rotating apparatus according to the fourth embodiment.

The difference of a permanent magnet type rotor 10D of this embodiment from the permanent magnet type rotor 10C of the third embodiment is that a dovetail 19 is formed to be integrated with a magnet base 16, and a narrow wedge-shaped slot 20 in which the dovetail 19 is to be fitted is formed in the outer-radial portion of a rotor core 12, instead of fitting the portion from the bottom portion to the two side portions in the widthwise direction of the magnet base 16 in a wedge-shaped slot 15. The dovetail 19 is formed in the inner-radial portion of the magnet base 16 so as to be smaller than the width of the bottom portion of the magnet base, and to protrude from the bottom surface of the magnet base 16 toward the rotor core 12. Note that the narrow wedge-shaped slots 20 are formed at equal intervals in the circumferential direction of the rotor core 12.

In this embodiment as described above, the dovetail 19 formed on the bottom surface of the magnet base 16 is fitted in the narrow wedge-shaped slot 20 formed in the outer circumferential portion of the rotor core 12. Therefore, the whole magnet base 16, together with the permanent magnet 13, protrudes from the outer circumferential surface of the rotor core 12. As a result, in this embodiment, a space 18A larger than the space 18 of the third embodiment is formed in a portion surrounded by the magnet bases 16 and the outer circumferential portion of the rotor core 12. Also, in this embodiment, the outer radius ($D_1"$) of the rotor core 12 is smaller than the outer radius ($D_1'$) of the rotor core 12 of the third embodiment by the thickness (t) of the magnet base 16 ($D_1" = D_1' - t$).

In this embodiment as described above, the magnetic base 16 itself, together with the permanent magnet 13, protrudes from the outer circumferential surface of the rotor core 12. This makes it possible to form the large space 18A between the rotor magnetic poles, and further increase the magnetic resistance. In addition, a greater cooling effect can be expected because the space 18A is large.

Also, in this embodiment, the outer radius ($D_1"$) of the rotor core 12 is smaller than the outer radius ($D_1'$) of the rotor core 12 of the third embodiment by the thickness (t) of the magnet base 16 ($D_1" = D_1' - t$). Accordingly, the size and weight of the generator can further be reduced.

(Fifth Embodiment)

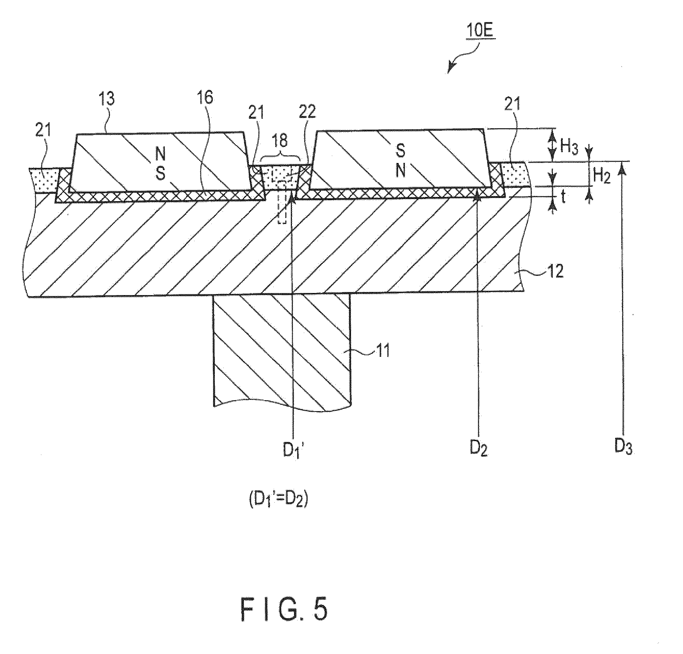

FIG. 5 is a view obtained by horizontally-displaying a partially enlarged view of a permanent magnet type rotor of an electric rotating apparatus according to the fifth embodiment.

A permanent magnet type rotor 10E of this embodiment differs from the permanent magnet type rotor 10C of the third embodiment in that inverted-trapezoidal nonmagnetic wedges 21 matching spaces 18 are arranged are fastened by nonmagnetic screws 22 in the radial direction at given intervals in the rotor axial direction. Each space 18 is formed to be surrounded by magnet bases 16 and the outer circumferential portion of a rotor core 12. In this case, the nonmagnetic wedge 21 and nonmagnetic screw 22 form a nonmagnetic region.

As the material of the nonmagnetic wedge 21 and nonmagnetic screw 22, it is possible to use, e.g., copper, aluminum, or stainless steel. Note that the outer side surface of the nonmagnetic wedge 21 is so selected as to have the same radius as the outermost radius ($D_3$) of the magnet base 16. Note also that the outer radius <$D_1'$) of the rotor core 12 is the same as the outer radius ($D_1'$) of the third embodiment.

In this embodiment as described above, the same effects as those of the third embodiment are achieved, and in addition, the side surface of the magnet base 16 is pressed by the nonmagnetic wedge 21 are fastened by the nonmagnetic screw 22. This makes it possible to improve the power of mechanically holding the permanent magnet 13 and magnet base 16 when compared to the third embodiment.

(Sixth Embodiment)

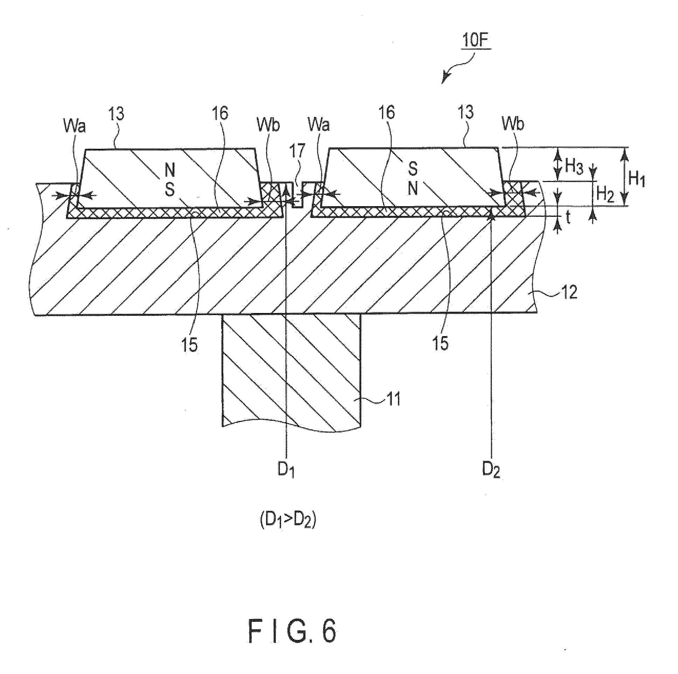

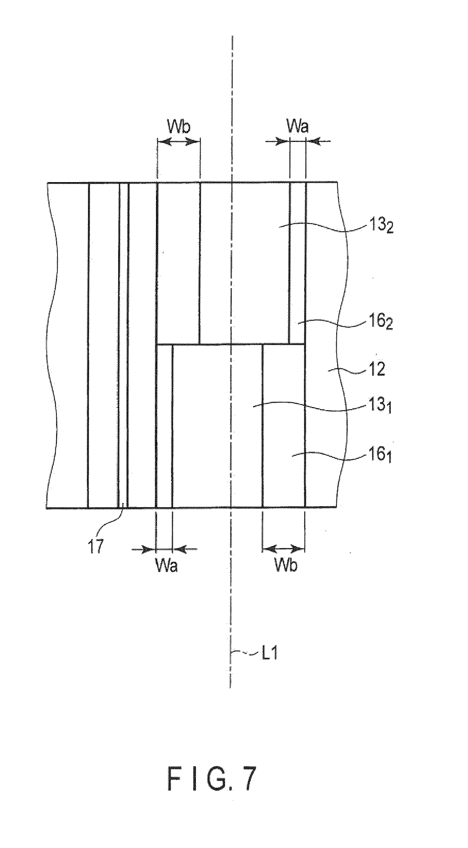

FIG. 6 is a view obtained by horizontally-displaying a partially enlarged view of a permanent magnet type rotor of an electric rotating apparatus according to the sixth embodiment. FIG. 7 is a plan view showing a part of permanent magnet type rotor.

A permanent magnet type rotor 10F of this embodiment differs from the permanent magnet type rotor 10B of the second embodiment in that a permanent magnet 13 forming a rotor magnetic pole is obliquely arranged, i.e., skewed with respect to a rotating axis central line L1. The rest is the same as that of the permanent magnet type rotor 10B of the second embodiment.

A first method of obliquely arranging (skewing) the rotator magnetic pole is a method by which one permanent magnet 13 is inclined at an appropriate angle with respect to a line parallel to the rotation central line on the outer circumferential portion of a rotor core 12. A second method is a method by which the permanent magnet is divided into a plurality of magnets in the axial direction, and the divided permanent magnets are arranged as they are shifted from each other little by little in the circumferential direction, thereby gradually obliquely arranging the permanent magnets.

This embodiment adopts the latter method of gradually obliquely arranging the permanent magnets. In the same manner as shown in FIG. 2, a plurality of wedge-shaped slots 15 are formed at equal intervals in parallel on the outer circumferential portion of the rotor core 12. However, to be able to accommodate the permanent magnets to be gradually obliquely arranged, the width of the wedge-shaped slot 15 is made larger than that in the second embodiment.

On the other hand, as shown in FIG. 7, a magnet base 16 to be fitted in the wedge-shaped slot 15 and the permanent magnet 13 to be fitted in the magnet base 16 beforehand are split permanent magnets $13_1$ and $13_2$ and split magnet bases $16_1$ and $16_2$, which are divided into two in the axial direction.

In this embodiment, the split permanent magnets $13_1$ and $13_2$ are connected in the axial direction as they are slightly shifted in the circumferential direction. In the split magnet base $16_1$, therefore, a thickness Wa on the left side of FIG. 7 is smaller than a thickness Wb on the right side of FIG. 7. On the other hand, in the split magnet base $16_2$, the thickness Wa on the left side of FIG. 7 is larger than the thickness Wb on the right side of FIG. 7.

As a result, when the split magnet bases $16_1$ and $16_2$ are fitted in the wedge-shaped slot 15, the split permanent magnets $13_1$ and $13_2$ are gradually shifted from each other, so the rotor magnetic poles are obliquely arranged (skewed).

Note that the permanent magnet 13 and magnet base 16 are divided into two in the axial direction in this embodiment, but it is, of course, also possible to divide them into three or more. When gradually obliquely arranging the permanent magnets, the inclination of the permanent magnets 13 can be changed from a gradual inclination to a smooth inclination.

In this embodiment as described above, the same effects as those of the second embodiment are obtained, and, in addition to that, the rotor magnetic poles are obliquely arranged (skewed) in the axial direction. This makes it possible to reduce torque pulsation caused by the armature current phase or armature slot shape.

(Seventh Embodiment)

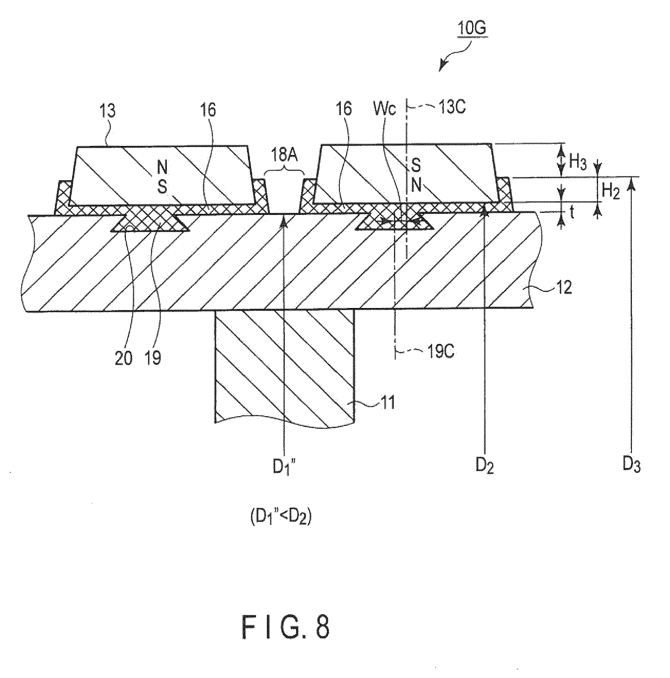

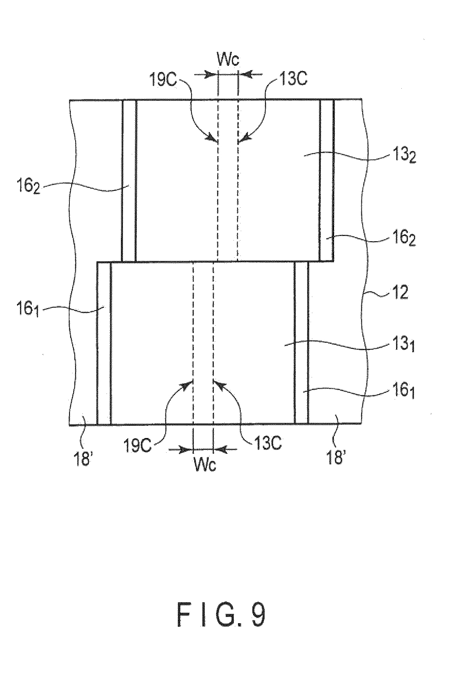

FIG. 8 is a view obtained by horizontally-displaying a partially enlarged view of a permanent magnet type rotor of an electric rotating apparatus according to the seventh embodiment. FIG. 9 is a plan view showing a part of the permanent magnet type rotor.

A permanent magnet type rotor 10G of this embodiment differs from the permanent magnet type rotor 10D of the fourth embodiment in that a permanent magnet 13 and magnet base 16 are respectively divided into a plurality of portions in the axial direction, and the dovetail positions of the divided magnet bases 16 are shifted from each other in the circumferential direction, thereby gradually obliquely arranging (skewing) the permanent magnets 13. In this case, a central line 13C of the permanent magnet 13 in the widthwise direction matches the central line of the magnet base 16 in the widthwise direction, and the left and right thicknesses (t) have the same value.

In this embodiment, narrow wedge-shaped slots 20 are evenly formed in the circumferential direction on the outer circumferential portion of a rotor core 12. As shown in FIGS. 8 and 9, however, between one and the other of the slots 20 halved in the axial direction, the position of a dovetail 19 formed on the inner-radial surface of the magnet base 16 is shifted from the central portion of the magnet base 16, i.e., shifted from the central line 13C of the permanent magnet 13 in the widthwise direction. For example, in a magnet base $16_1$ as shown in FIG. 9, a dovetail central line 19C is shifted by a space Wc from the magnet central line 13C to the left side in FIG. 9. On the other hand, in a magnet base $16_2$, the dovetail central line 19C is shifted by the space Wc from the permanent magnet central line 13C to the right side in FIG. 9.

As a result, the central position of a permanent magnet $13_1$ fitted in the magnet base $16_1$ and that of a permanent magnet $13_2$ fitted in the magnet base $16_2$ are shifted from each other. It is possible, by the amount of this shift, to gradually obliquely arrange the rotor magnetic poles.

In this embodiment as described above, in addition to the effects of the fourth embodiment, it is possible to reduce torque pulsation caused by the armature current phase or armature slot phase by obliquely arranging the rotor magnetic poles.

In the present invention, the nonmagnetic region extending in the axial direction is formed between the rotor magnetic poles formed on the outer circumferential portion of the rotor core. Since the magnetic resistance between the rotor magnetic poles can be increased, , it is therefore possible to reduce magnetic flux leakage and increase the amount of main magnetic flux interlinking to the armature winding.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electric rotating apparatus comprising a permanent magnet type rotor (10) in which wedge-shaped slots (15) are formed on an outer circumferential portion of a rotor core (12) along an axial direction of a rotor, and permanent magnets (13) are fitted in the wedge-shaped slots (15), thereby forming a plurality of rotor magnetic poles, **characterized in that** nonmagnetic regions extending in the axial direction of the rotor core (12) are formed between the plurality of rotor magnetic poles.

2. The apparatus according to claim 1, **characterized in that** the permanent magnet (13) is fitted in the wedge-shaped slot (15) through a magnet base (16) made of a magnetic material.

3. The apparatus according to claim 1, **characterized in that** the wedge-shaped slot (15) is formed to have a width by which a part of a lower portion of the permanent magnet (13) is fitted.

4. The apparatus according to claim 2, **characterized in that** the wedge-shaped slot (15) is formed to have a width by which a part of a lower portion of the magnet base (16) is fitted.

5. The apparatus according to claim 2, **characterized in that** the wedge-shaped slot (15) is a narrow wedge-shaped slot (20) formed to have a width by which a dovetail (19) narrower than a width of a bottom portion of the magnet base (16) and protruding from a bottom surface of the magnet base (16) toward the rotor core is fitted.

6. The apparatus according to claim 1 or 2, **characterized in that** the nonmagnetic region is formed by a slit (17) formed in the outer circumferential portion of the rotor core (12).

7. The apparatus according to claim 2, **characterized in that** the nonmagnetic region is formed by a space surrounded by the magnetic bases (16) and the outer circumferential portion of the rotor core (12).

8. The apparatus according to claim 6, **characterized in that** a depth of the slit (17) formed in the rotor core (12) is substantially the same as an inner radial position of the permanent magnet (13).

9. The apparatus according to claim 7, **characterized in that** a nonmagnetic wedge (21) is arranged in the rotor core (12) positioned between the plurality of rotor magnetic poles, and fastened by a screw (22) made of a nonmagnetic material in a rotor radial direction at a given interval in the axial direction.

10. The apparatus according to any one of claims 2, 4, 5, 7, and 9, **characterized in that** two end portions of the permanent magnet (13) in the rotor axial direction are shifted from each other in the circumferential direction in the magnet base (16).

11. The apparatus according to claim 5, **characterized in that** a position of a central line of the dovetail (19) and a position of a central line of the narrow wedge-shaped slot (20) formed in the outer circumferential portion of the rotor core (12) are relatively shifted from each other, thereby skewing, in the circumferential direction of a rotating shaft, the permanent magnet (13) to be fitted in the magnet base (16).

FIG. 1

FIG. 2

F I G. 3

FIG. 4

F I G. 5

$(D_1 > D_2)$

# F I G. 6

FIG. 7

FIG. 8

FIG. 9

F I G. 10

F I G. 11

F I G. 12A

F I G. 12B

F I G. 12C